# EUROPÄISCHE PATENTSCHRIFT

(11) **EP 2 521 248 B1**
(45) Veröffentlichungstag und Bekanntmachung des Hinweises auf die Patenterteilung: **27.02.2019**
(21) Anmeldenummer: 12004123.1
(22) Anmeldetag: 08.07.2008
(51) Int. Cl.: H02K 5/22, H02K 11/33, H02K 9/14, H02K 5/20

(54) **Motoranschlusskasten und Umrichtermotor**
Motor terminal box and converter-motor
Caisse de raccord moteur et moteur à convertisseur

(30) Priorität: 24.07.2007 DE 102007034915
(43) Veröffentlichungstag der Anmeldung: 07.11.2012
(62) Teilanmeldung aus: 08784653.1
(73) Patentinhaber: Sew-Eurodrive GmbH & Co. KG, 76646 Bruchsal (DE)
(72) Erfinder: Schmidt, Josef, 76676 Graben-Neudorf (DE); Böckle, Jürgen, 76646 Bruchsal (DE); Tesch, Sven, 76698 Ubstadt-Weiher (DE)

(56) Entgegenhaltungen:
- EP-A1- 0 661 793
- EP-A2- 0 951 131
- DE-A1- 19 956 429
- DE-A1-102004 036 281
- DE-A1-102005 041 136
- DE-B- 1 284 505
- DE-C2- 19 706 188
- US-A- 4 475 873

## Beschreibung

Die Erfindung betrifft einen Motoranschlusskasten und einen Umrichtermotor. Unter Umrichtermotor wird in dieser Schrift eine elektrisch betriebene Antriebseinheit verstanden, die zumindest eine Motoreinheit und eine elektronische Baugruppe, die Umrichtereinheit, zur Ansteuerung der Motoreinheit, insbesondere zur Regelung der Drehzahl und/oder des Drehmoments, umfasst. Die Motoreinheit kann hierbei einen permanenterregten Rotor, einen Käfigläufer oder eine Kombination von beidem umfassen oder als Außenläufer ausgebildet sein.

Aus der DE 10 2004 036 281 A1 ist ein elektrischer Kompaktantrieb bekannt, wobei in einem Gehäuse elektronische Einrichtungen zur Ansteuerung des Motors untergebracht sind und das Gehäuse axial und vertikal mit dem Motor verbundene Abschnitte aufweist.

Aus der DE 10 2005 041 136 A1 ist ein Umrichtermotor mit einer Signalelektronik bekannt, wobei die Signalelektronik auf einer Leiterplatte vorgesehen ist.

In der DE 199 56 429 A1 ist ein Elektromotor mit einem Klemmkasten offenbart, wobei sich in einer Durchbrechung eines Wandbereichs des Klemmkastens eine Wärmeleitplatte 20 befindet, die auf ihrer dem Motorgehäuse abgekehrten Seite eine Leistungselektronik trägt. Da das Motorgehäuse im Bereich der Wärmeplatte mit einer Planfläche versehen ist und die Wärmeplatte direkt auf dieser Planfläche aufliegt, wird nach der Druckschrift die Verlustwärme der Leistungselektronik direkt auf das Motorgehäuse übertragen.

Aus der EP 0 951 131 A2 ist ein Elekromotor mit einer Leistungseinheit bekannt, deren Bauelemente auf einem für hohe Ströme und für eine ausreichende Abführung der Verlustleistung geeigneten Trägerkörper 311 aufgebracht sind.

Aus der DE 12 84 505 B ist ein Anschlusskasten für einen Motor bekannt. Der Anschlusskasten weist eine Abdeckkappe mit einer Ausnehmung auf, wobei die Ausnehmung geeignet ist, den Körper einer handelsüblichen Steckkupplung oder- buchse aufzunehmen.

Aus der US 4 475 873 A ist eine motorbetriebene Pumpe mit einem Anschlusskasten bekannt, wobei der Anschlusskasten einen Anschluss für eine Energieversorgung aufweist.

Der Erfindung liegt die Aufgabe zugrunde, einen Umrichtermotor weiterzubilden, wobei die Entwärmung verbessert sein soll.

Erfindungsgemäß wird die Aufgabe bei dem Motoranschlusskasten nach den in Anspruch 1 angegebenen Merkmalen und bei dem Umrichtermotor bei dem in Anspruch 14 angegebenen Merkmalen gelöst.

Wichtige Merkmale der Erfindung eines Motoranschlusskastens sind, dass ein Unterteil und ein Oberteil ausgebildet sind, wobei im Oberteil eine Stufe ausgeformt ist, die zwei Plateauflächen und eine die Plateauflächen verbindende Stirnseite umfasst und in deren Stirnseite Öffnungen für Kabeldurchführungen ausgebildet sind. Somit ist eine Möglichkeit geschaffen, die Anschlusskabel eines Umrichtermotors in den Motoranschlusskasten zu führen, bei der die Kabeldurchführung am Gehäuse in mehreren Richtungen geschützt ist durch überstehende Gehäuseteile. Die Ausbildung einer Stufe bietet den zusätzlichen Vorteil, dass Anschlussmittel wie Anschlussstutzen, Anschlussbuchsen oder Anschlussstecker über das Baumaß des Anschlusskastens nicht oder im wesentlichen nicht hinausragen. Somit ist zum einen ein kompakteres Gesamtbaumaß und zum anderen ein sicherer Schutz empfindlicher Teile vor Stoßbeschädigung erreicht.

Erfindungsgemäß ist eine Umrichterelektronik im Kasteninneren vorgesehen. Durch die Ausbildung schräg zueinander angeordneter Öffnungen für die Kabeldurchführungen muss der Motoranschlusskasten nicht für eine veränderte Kabelführung umgesetzt werden. Mithin ist der Motoranschlusskasten nicht auf eine quadratische oder allgemein n-eckige Grundform, also eine Grundform mit einer mehr als zweizähligen Drehsymmetrie, beschränkt, sondern kann sich beispielsweise rechteckig über die Gesamtlänge eines Motorgehäuses erstrecken. Es ist somit ausreichend Platz für eine Umrichterelektronik bereitstellbar, und der Motoranschlusskasten ist für die Integration in einen kompakten Umrichtermotor ausgerüstet.

Erfindungsgemäß umfasst die Umrichterelektronik ein Leistungsbauelement, und es ist am Boden des Unterteils eine plane Auflagefläche ausgebildet, wobei das Leistungsbauelement zur Entwärmung auf die Auflagefläche gelegt ist. Von Vorteil ist dabei, dass das Gehäuse des Motoranschlusskastens nutzbar ist für die Entwärmung der Leistungsbauelemente, insbesondere der IGBTs, welche als Umrichter-Endstufe die Ansteuerung eines Motors übernehmen. Somit ist eine große Kühlfläche bereitgestellt, die sich mit weiteren Kühlflächen verbinden lässt.

Erfindungsgemäß ist das Leistungsbauelement auf einer Leiterplatte angeordnet, wobei die Leiterplatte das Leistungsbauelement auf die Auflagefläche drückt. Von Vorteil ist dabei, dass zur Montage des Umrichters in einem ersten Schritt die Leiterplatte gelötet und in einem zweiten Schritt die Leiterplatte in das Gehäuse eingesetzt wird. Ein Befestigen der Leistungsbauelemente erfolgt direkt mit dem Einsetzen. Zusätzliche Montageschritte, beispielsweise die Montage eines Niederhalters, sind verzichtbar.

Erfindungsgemäß ist ein Befestigungsrahmen vorgesehen, an dem die Leiterplatte befestigt ist und der die Leiterplatte nach oben abdeckt, wobei im Befestigungsrahmen Öffnungen ausgebildet sind, durch welche Steckverbinderteile der Leiterplatte ragen. Von Vorteil ist dabei, dass ein Mittel zum Schutz der Leiterplatte vor Beschädigung als Montagehilfe ausgebildet ist. Der Befestigungsrahmen kann zusätzlich mit einer wärmeleitenden Vergussmasse ausgefüllt sein, die eine Entwärmung der gesamten Elektronik zum Boden des Motoranschlusskastens bewirkt.

Erfindungsgemäß wird der Befestigungsrahmen mit dem Unterteil verschraubt, wobei der Befestigungsrahmen die Leiterplatte vorzugsweise im eingerasteten und/oder verschraubten Zustand gegen den Boden des Unterteils drückt. Vorzugsweise ist zwischen den Leistungsbauelementen und der Leiterplatte jeweils ein Elastomerkissen angeordnet. Somit dient die Anpresskraft der Befestigungsschrauben für den Befestigungsrahmen zum Andrücken der Leistungsbauelemente an die Auflagefläche.

Alternativ weist der Befestigungsrahmen eine Krempe auf, wobei in die Krempe eine weitere Leiterplatte eingeklipst ist. Vorzugsweise sind in der Krempe federnde Zungen mit Nasen ausgebildet, in welche die weitere Leiterplatte eingeklipst wird. Somit ist eine kompakte Elektronik-Baueinheit bereitgestellt, wobei die erste Leiterplatte und die weitere Leiterplatte vor dem Einsetzen des Befestigungsrahmens in das Unterteil montiert werden. Die zweigeteilte Ausführung der Elektronik ermöglicht zudem den modularen Austausch des oberen Teils, also der weiteren Leiterplatte, mit Gleichrichter und Zwischenkreis gegen eine alternative Ausführung beispielsweise ohne Gleichrichter. Ein Gleichrichter ist nämlich verzichtbar bei einer berührungslosen Leistungsversorgung nach der DE 10 2005 022 367 A1. Sämtliche dort beschriebene Merkmale einer berührungslosen Leistungsversorgung sind als Bestandteil dieser Beschreibung aufgenommen.

Bei einer vorteilhaften Ausgestaltung ist die weitere Leiterplatte über einen passenden Steckverbinder mit dem Steckverbinder der ersten Leiterplatte verbunden. Somit ist die elektronische Baueinheit aus Befestigungsrahmen, erster Leiterplatte und weiterer Leiterplatte durch Einklipsen montierbar. Vorzugsweise sind die Steckverbinder auf den Leiterplatten so positioniert, dass sie beim Einklipsen verbunden werden. Ein Verlöten ist somit nicht mehr erforderlich. Bei einer Wartung können Einzelkomponenten leicht ausgetauscht werden.

Bei einer vorteilhaften Ausgestaltung ist auf der weiteren Leiterplatte in einem Bereich, der von dem höheren Ende des Unterteils zumindest teilweise umgeben wird, ein Zwischenkreiskondensator und/oder ein Gleichrichtermodul angeordnet. Vorzugsweise bildet und umgibt die Stufe im Oberteil im Inneren des Motoranschlusskastens einen Bereich, in dem ein Zwischenkreiskondensator und/oder ein Gleichrichtungsmodul der Umrichterelektronik angeordnet ist oder sind. Somit ist der durch die Stufe gebildete, umschlossene Bauraum für diejenigen Bauteile genutzt, die viel Platz benötigen, insbesondere in der Höhe. Der Ansatz des Motoranschlusskastens umgibt diese Bauteile und schützt sie selbst mit abgenommenem Deckel.

Gleichrichtermodul und/oder Zwischenkreiskondensator sind in einer Ausgestaltung als Optionen ausgebildet. Vorzugsweise wird das Gleichrichtermodul und das Zwischenkreismodul von einem Versorgungsmodul umfasst, beispielsweise auf einer gemeinsamen, von der Leistungsendstufe getrennten Leiterplatte angebracht. Bei einer Variante ist die Leistungsendstufe der Umrichterelektronik direkt ohne Versorgungsmodul an den Ausgang eines Gleichrichtungsmodul des Anpasssteller einer Anlage zur berührungslosen Energieversorgung angeschlossen, wie er beispielsweise in der DE 103 39 340 A1 beschrieben ist. Somit ist eine Baureihe von Umrichtermotoren mit unterschiedlicher Funktionalität gebildet.

Wichtige Merkmale bei der Erfindung eines Umrichtermotors sind, dass ein inneres rohrförmiges Teil vorgesehen ist, das den Stator umgibt, und ein äußeres rohrförmiges Teil vorgesehen ist, welches das innere rohrförmige Teil umgibt und an dessen Außenseite ein Motoranschlusskasten nach mindestens einem der vorangegangenen Ansprüche ausgebildet ist, wobei im äußeren rohrförmigen Teil ein Lüfter vorgesehen ist der Luft entlang der Innenseite des äußeren rohrförmigen Teils bewegt. Die Kühlluft zwischen Motoreinheit und Umrichtereinheit bewirkt vorteilhaft eine thermische Entkopplung der beiden Einheiten. Somit ist die Entwärmung verbessert. Die Stufe in der Oberseite des Motoranschlusskastens ermöglicht vorteilhaft eine flexiblere Kabelführung, ohne dass der Motoranschlusskasten gedreht oder versetzt werden muss. Folglich sind Motoranschlusskasten und Motorgehäuse aus einem Gussteil fertigbar. Ungünstige Wärmeübergänge durch Verbindungsstellen entfallen. Die Fertigung ist zudem vereinfacht.

Bei einer vorteilhaften Ausgestaltung weist die Schrägung der Oberkante des Unterteils in Richtung der Achse des äußeren rohrförmigen Teils eine abnehmende Höhe auf, wobei der Bereich großer Höhe auf der Antriebsseite des Umrichtermotors angeordnet ist. Vorzugsweise erstreckt sich der Motoranschlusskasten über die gesamte axiale Länge des Motorgehäuses. Somit ist die Umrichterelektronik in das Motorgehäuse integrierbar bei möglichst kleinem Gesamtbaumaß.

Bei einer vorteilhaften Ausgestaltung ist die Motorwelle in der Symmetrieebene des Motoranschlusskastens angeordnet. Somit ist der Umrichtermotor symmetrisch anschließbar. Weitere Vorteile ergeben sich aus den Unteransprüchen. Die Erfindung ist nicht auf die Merkmalskombination der beschriebenen Ausführungsformen beschränkt. Für den Fachmann ergeben sich weitere sinnvolle Kombinationsmöglichkeiten von Merkmalen der Beschreibung und/ oder der Figuren. Gewisse Ausführungsarten können zwar unterschiedlich wie beschrieben ausgeführt werden, sie müssen aber unter den Schutzumfang der Ansprüche fallen.

### Bezugszeichenliste

1 Umrichtermotor
2 Außengehäuse
3 Statorgehäuse
4 A-Lagerschild
5 Getriebeflansch
6 Lüfterabdeckung
7 Anschlusskasten
8 Anschlusskastenansatz
9 Anschlusskastendeckel
10 Schraube
11 Griffmulde
12 Anschlussstutzen
13 Anschlussstutzen
14 Steg
15 Motorwelle
16 Kabeldurchgang
17 Deckeloberseite
18 Absatz
19 Verschlussschraube
20 Stirnfläche
21 Stirnfläche
22 ebener Bereich
23 Verschlussschraube
24 Deckelrand
25 Bremslüfthebel
26 Eigenlüfter
27 Öffnung
28 Ansatzkante
29 vorderer Ansatzteil
30 hinterer Ansatzteil
31 Anschlusskastenboden
32 Leistungsbauelement
33 Auflagefläche
34 Luftkanal
35 Leiterplatte
36 Befestigungsrahmen
37 Zunge
38 Steckverbindung
39 Steckverbindung
40 Nase
41 Verstärkungsrippe
42 Nase
43 ebener Bereich
44 Seitenfläche
45 Seitenfläche
46 Seitenfläche
47 Stufe
48 Krempe
49 Zwischenkreiskondensator
50 Steckverbinder
51 Anschlusskanal
60 Anschlusskasten
61 Plateaufläche
62 Plateaufläche
63 Symmetrieebene
64 Öffnung
65 Öffnung
66 Öffnung
67 Öffnung
68 Stirnseite
69 Seitenfläche
70 Seitenfläche
80 Leiterplatte
81 Leiterplatte
82 USB-Anschluss
83 Steckverbinder
84 Gleichrichterstufe
85 Zwischenkondensator
90 Öffnung
91 Anschlussstutzen
92 Anschlussstutzen
93 Verschluss
94 Verschluss
95 Anschlussstutzen
96 Verschluss

Die Erfindung wird nun anhand von Abbildungen näher erläutert. Soweit im Folgenden detailliert beschrieben wird, in welcher Weise die Kabeldurchführungen dienenden Öffnungen, die in der Stirnseite der im Oberteil des Motoranschlusskastens ausgeformten Stufe ausgebildet sind, angeordnet sind, handelt es sich um Erläuterungen, die außerhalb der hier beschriebenen Erfindung stehen. Gleiches gilt für Erläuterungen, die die Art der Integration des Unterteils des Motoranschlusskastens mit dem rohrförmigen Gehäuse der Motoreinheit betreffen.

Es zeigt
- Figur 1 einen Umrichtermotor mit Motoranschlusskasten,
- Figur 2 eine Ansicht des Umrichtermotors aus Figur 1 von oben,
- Figur 3 eine Ansicht des Umrichtermotors aus Figur 1 von hinten,
- Figur 4 eine Schnittansicht des Motoranschlusskastens aus Figur 1,
- Figur 5 einen weiteren erfindungsgemäßen Motoranschlusskasten,
- Figur 6 eine Schnittansicht eines Umrichtermotors mit optionaler Gleichrichter- und Zwischenkreiseinheit und
- Figur 7 eine Schrägansicht auf einen Motoranschlusskasten.

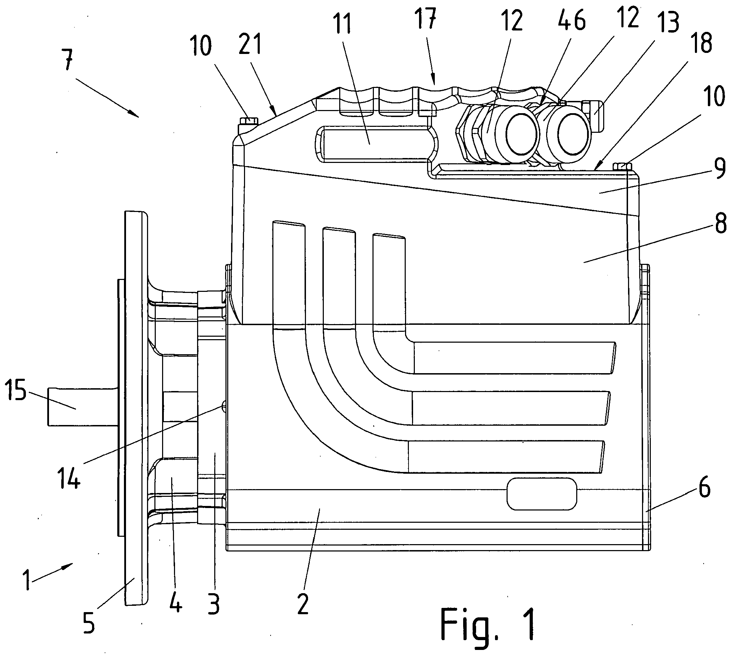

Figur 1 zeigt einen Umrichtermotor 1 in Seitenansicht. Ein rohrförmiges Außengehäuse 2 umgibt koaxial ein rohrförmiges Innengehäuse 3. Das Innengehäuse 3 enthält die Motoreinheit des Umrichtermotors 1. Der Stator der Motoreinheit ist in dem Innengehäuse 3 angeordnet und wird durch dieses kraftschlüssig gehalten. Das Innengehäuse 3 ist auf der Antriebsseite der Motoreinheit durch einen A-Lageschild 4 abgeschlossen, der in einen Getriebeflansch 5 übergeht. Die Antriebsseite der Motorwelle 15 ragt durch den Getriebeflansch 5 hindurch zur Verbindung mit der eintreibenden Welle eines Getriebes. Am gegenüberliegenden Ende des Umrichtermotors 1 ist das Außengehäuse 2 mit einer Lüfterabdeckung 6 gitterartig verschlossen.

Das Innengehäuse 3 ist über Stege 14 mit dem Außengehäuse 2 fest verbunden. Innengehäuse 3 und Außengehäuse 2 sind aus einem gemeinsamen Gussteil gefertigt. Vorzugsweise wird als Material Aluminium gewählt.

Auf der Oberseite des Außengehäuses 2 ist ein Anschlusskasten 7 angeordnet. Der Anschlusskasten 7 umfasst ein als Anschlusskastendeckel 9 ausgebildetes Oberteil, das auf ein Unterteil aufgesetzt wird, wobei das Unterteil aus einem Anschlusskastenansatz 8 und einem Bereich des Außengehäuses 2 gebildet wird. Der Anschlusskastenansatz 8 ist einstückig mit dem Außengehäuse 2 ausgeführt und umgibt einen Bereich des Außengehäuses 2, der den Boden des Anschlusskastens 7 bildet.

Der Anschlusskastendeckel 9 wird durch Schrauben 10 auf dem Anschlusskastenansatz befestigt.

Der Anschlusskastenansatz 8 weist eine schräg verlaufende Oberkante auf, deren Höhe über dem Außengehäuse 2 auf der Antriebsseite höher ist als am gegenüberliegenden Ende des Umrichtermotors 1. Somit ist eine Schrägung mit einem abfallender Höhenverlauf ausgebildet, der entlang der Motorachse von der Antriebsseite weg abnimmt. Der Anschlusskastendeckel 9 weist eine entsprechende Schrägung auf. Insbesondere sind die Winkel der Schrägung mit den Seitenwänden bei Unterteil und Oberteil gleich, so dass die Seitenwände im Wesentlichen eben ineinander über gehen.

Im oberen Bereich des Anschlusskastendeckels 9 ist eine Stufe ausgebildet, die durch die Deckeloberseite 17 und einen Absatz 18 sowie eine beide Flächen verbindende Seitenfläche gebildet wird. Deckeloberseite 17 und Absatz 18 definieren somit jeweils ein Plateau unterschiedlicher Höhe, wobei der Absatz 18 gegenüber der Deckeloberseite 17 abgestuft ist. Durch die Stufe wird ein Höhenverlauf gebildet, der in der gleichen Richtung wie die Schrägung am Anschlusskastenansatz 8 abfallend verläuft. Die Stufe umfasst eine Seitenfläche 46, auf der Anschlussstutzen 12, 13 für eine dichtende Kabeldurchführung angeordnet sind.

An gegenüberliegenden Seiten des Anschlusskastendeckels 9 ist jeweils eine axial verlaufende Griffmulde 11 ausgebildet, mit denen der Anschlusskastendeckel 9 abnehmbar ist. An der Vorderseite des Anschlusskastendeckels 9 ist weiterhin eine flächige Abschrägung 21 ausgebildet, die in die Deckeloberseite 17 über geht.

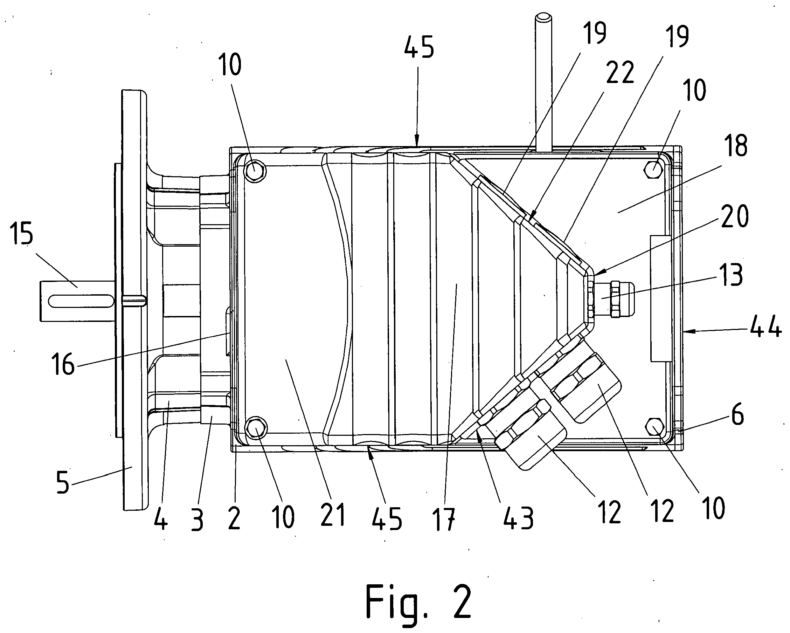

Figur 2 zeigt den Umrichtermotor 1 von oben. Das Innengehäuse 3 ist mit dem Außengehäuse 2 über einen Kabeldurchgang 16 verbunden. Der Kabeldurchgang 16 dient zur Durchführung der Anschlusskabel vom Anschlusskasten zu der Motoreinheit.

Die Deckeloberseite 17 wird begrenzt durch die Abschrägung 21, zwei seitliche Seitenflächen 45 und die Stirnseite der Stufe, die durch ebene Bereiche 22, 43 und die Stirnfläche 20 gebildet wird. In den ebenen Bereichen 22, 43 sind jeweils zwei Öffnungen für Kabeldurchführungen eingebracht, die durch Verschlussschrauben 19 oder durch Anschlussstutzen 12 verschließbar sind.

Der erste ebene Bereich 22 ist schräg zu den Seiten des Anschlusskastenansatzes 8 angeordnet: Die durch den ersten ebene Bereich 22 in Idealisierung definierte mathematische Ebene schneidet zwei Seitenflächen 44, 45 des Anschlusskastenansatzes 8. Besagte mathematische Ebene würde als Schnittebene eine Ecke der Grundfläche des Unterteils abschneiden. Durch die schräg verlaufende Anordnung der Öffnungen für die Kabeldurchführung ist ein Kabel in verschiedene Richtungen aus dem Anschlusskasten herausführbar, ohne dass der Anschlusskasten umgesetzt werden muss. Durch die Stufe ist der Bereich um die Öffnungen durch überstehendes Gehäuse längs der und quer zu Motorachse geschützt, wodurch die Kabelführung entlastet wird.

Die Seitenfläche der Stufe umfasst einen zweiten ebenen Bereich 43, in den zwei weitere Öffnungen für die Kabeldurchführung eingebracht sind. Diese Öffnungen sind durch eingeschraubte Anschlussstutzen 12 verschlossen. Die Anschlussstutzen 12 passen auch auf die Öffnungen im ersten ebenen Bereich 22. Der zweite ebene Bereich 43 ist ebenfalls schräg zu den Seiten des Anschlusskastenansatzes 8 angeordnet: Die durch den zweiten ebene Bereich 43 in Idealisierung definierte mathematische Ebene schneidet zwei Seitenflächen 44, 45 des Anschlusskastenansatzes 8. Besagte mathematische Ebene würde als Schnittebene eine Ecke der Grundfläche des Unterteils abschneiden. Der zweite ebene Bereich 43 schließt mit dem ersten ebene Bereich 22 einen Winkel ein, dessen Öffnungswinkel 80° beträgt. Somit wird durch den zweiten ebenen Bereich ein Halbkreis von möglichen, von den Öffnungen ausgehenden Kabelführungen überdeckt, der mit dem entsprechenden Halbkreis des ersten ebenen Bereichs nur ein Teilgebiet gemeinsam hat. Die möglichen Kabelführungen überdecken somit einen Segment mit einem Öffnungswinkel von weit über 180°, ohne das Anschlusskabel zu stark zu biegen oder knicken.

Zwischen dem ersten ebenen Bereich 22 und dem zweiten ebenen Bereich 43 ist ein dritter ebener Bereich in Form einer Stirnfläche 20 angeordnet, in dem eine Öffnung ausgebildet ist, deren Durchmesser kleiner als derjenige der Öffnungen im ersten ebenen Bereich 22 ist. Dementsprechend ist die Öffnung mit einem Anschlussstutzen 13 verschlossen, der kleiner ist als der Anschlussstutzen 12. Der Anschlussstutzen 13 sind gerade so bemessen, dass er ein Kabel zur Datenkommunikation aufnehmen kann. Die Anschlussstutzen 12 sind so bemessen, dass sie jeweils ein Kabel für Starkstrom zur Versorgung eines Motors im kW-Bereich aufnehmen können. Da ein Kabel zur Datenkommunikation wesentlich dünner als ein Starkstromkabel ist, lässt es sich besser biegen. Es müssen also nicht unbedingt entsprechende Öffnungen in verschiedene Richtungen ausgebildet sein.

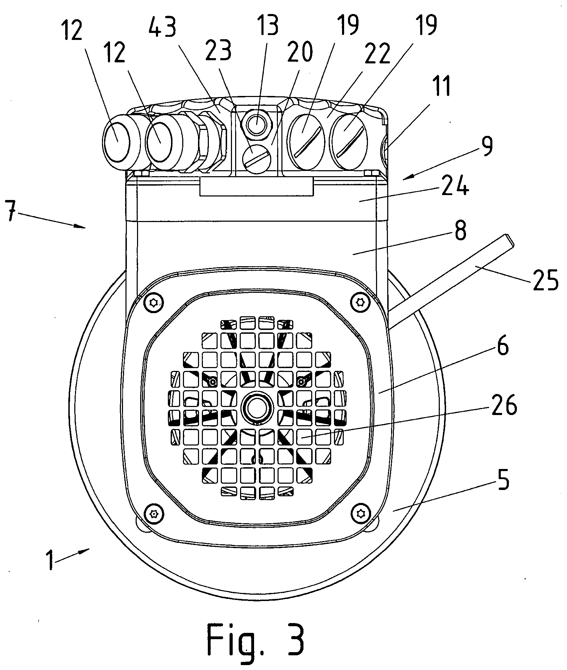

Figur 3 zeigt den Umrichtermotor 1 von der Rückseite, also von der Seite, die gegenüber der Antriebsseite des Motors liegt. Unter der Lüfterabdeckung 6 ist ein Lüfter 26 angeordnet. Der Lüfter 26 ist entweder als Eigenlüfter oder als Fremdlüfter ausgebildet. Er saugt Luft durch die durchbrochene Lüfterabdeckung 6 und bläst sie durch den Zwischenraum, der durch das Außengehäuse 2 und das Innengehäuse 3 gebildet wird. Die Luft überstreicht somit die Oberfläche der Innenseite des rohrförmigen Außengehäuses und tritt schließlich zu einer ringförmigen Öffnung auf der Antriebsseite aus.

In die Stirnfläche 20 ist eine weitere Bohrung eingebracht, die mit einer Verschlussschraube 23 verschlossen ist. In die Öffnung ist alternativ ein Anschlussstutzen 13 einschraubbar.

Der Deckelrand 24 des Oberteils des Anschlusskastens 7 weist eine Oberfläche auf, die im Wesentlichen mit der Oberfläche der Seitenwände des Anschlussstutzens 8 fluchtet. Hierbei können die Oberflächen der Seitenwände des Anschlusskastendeckels 9, insbesondere des Deckelrands 24, geringfügig überstehen um den zwischen Oberteil und Unterteil eingelegten Dichtungsring vor herunterlaufender Flüssigkeit zu verbergen und so eine höhere Dichtheit zu bewirken.

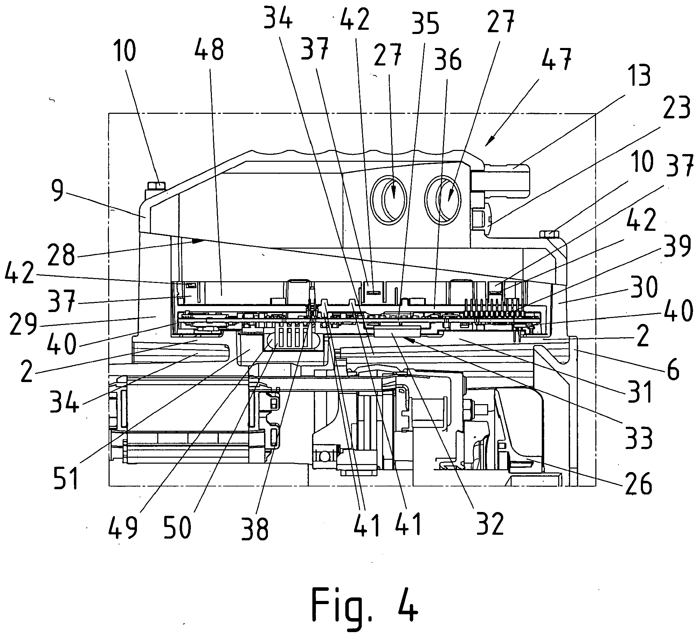

Figur 4 zeigt einen Schnitt durch den Anschlusskasten 7. Der vordere Ansatzteil 29 des Anschlusskastenansatzes 8 weist eine größere Höhe gegenüber dem Außengehäuse 2 auf als der hintere Ansatzteil 30. Die Ansatzkante 28 des Anschlusskastenansatzes 8 weist somit eine Schrägung mit von der Antriebsseite des Motors zur Lüfterseite abfallende Höhe auf. Somit ist am Anschlusskastendeckel 9 platzsparend eine Stufe 47 ausbildbar, indem die Unterkante des Anschlusskastendeckels 9 mit einer entsprechenden Schrägung versehen wird. Die Stufe 47 umfasst zwei Plateauflächen, die jeweils eine im Wesentlichen konstante Höhe über dem Außengehäuse 2 aufweisen, und eine Stirnseite, welche die Plateauflächen verbindet und im Wesentlichen senkrecht zur Motorachse 15 verläuft. Durch die Stufe 47 ist ein aus einem an der Stirnseite angeordneten Anschlussstutzen 12, 13 herausgeführtes Kabel am Austrittsort durch Teile des Anschlusskastendeckels 9 geschützt. Durch die Schrägung bildet die höher ausgeformte Wand im vorderen Ansatzteil 29 einen Schutz von größer bauender Elektronik, beispielsweise Klemmenbretter oder Steckverbinder zum Starkstromanschluss, im vorderen, in Figur 4 linken Teil des Anschlusskasteninnenraums, während im hinteren, in Figur 4 rechten Teil Platz für die Öffnungen 27 für die Kabeldurchführung geschaffen ist bei insgesamt minimaler Gesamtbauhöhe des Anschlusskastens 7. Im hinteren Teil des Anschlusskasteninnenraums ist überdies Platz für flacher bauende Elektronik, beispielsweise Signalelektronik für Datenkommunikation.

Im Anschlusskasteninnenraum ist eine Leiterplatte 35 mit der Elektronik des Umrichters angeordnet. Auf der Unterseite der Leiterplatte 35 sind Leistungsbauelemente 32 in einer Reihe quer zur Motorachse aufgebracht. Die Leistungsbauelemente 32 verfügen über eine Kontaktfläche zur Entwärmung. Diese Kontaktflächen sind auf eine Auflagefläche 33 aufgelegt, die besonders plan in den Anschlusskastenboden 31 gearbeitet ist. Zwischen Auflagefläche 33 und Leistungsbauelement 32 ist zur weiteren Verbesserung der thermischen Anbindung an den Anschlusskastenboden 31 Wärmeleitpaste aufgetragen.

Das Unterteil des Anschlusskastens 7 ist mit dem Außengehäuse 2 aus einem Gussteil gefertigt und der Anschlusskastenboden 31 ist ein Bereich des Außengehäuses 2, welches auf seiner Innenseite durch einen von dem Lüfter 26 angetriebenen Luftstrom im Luftkanal 34 gekühlt wird. Zur Entwärmung wird somit die gesamte Fläche des sich rohrförmig um die Motorwelle 15, die den Lüfter 26 trägt, erstreckenden Außengehäuses nutzbar. Die Leistungsbauelemente 32 sind daher thermisch gut an eine große Oberfläche gekoppelt, die zudem von Kühlluft überstrichen wird. Kühlrippen sind daher verzichtbar.

Die Leiterplatte 35 ist durch Nasen 40 an einem Befestigungsrahmen 36 befestigt. Der Befestigungsrahmen 36 deckt die Leiterplatte 35 bis auf einzelne Durchbrüche für Steckverbinder 38 vollständig ab. Der Befestigungsrahmen 36 ist mit dem Boden des Unterteils verschraubt. Somit ist die Elektronik nach oben, also zur Öffnung des Anschlusskastenansatzes 8 hin, gegen versehentliches Berühren oder Beschädigung geschützt. Die Leiterplatte 35 ist nach Einbau im Befestigungsrahmen 36 mit einer wärmeleitenden Vergussmasse vergossen. Diese Vergussmasse stellt eine thermische Ankopplung weiterer elektronischer Bauelemente der Leiterplatte 35 mit weiteren plan ausgeführten Auflageflächen im Boden des Anschlusskastens her. Zwischen der Vergussmasse und dem Boden ist eine Schutzfolie eingelegt, die an den Auflageflächen durchbrochen ist.

Die Leiterplatte 35 weist einen nach unten gerichteten Steckverbinder 50 auf, an den die Wicklungen der Motoreinheit angeschlossen werden. Die Anschlussleitungen werden hierzu durch einen Anschlusskanal 51 geführt, der den Innenraum des Anschlusskastens mit dem Innenraum des Statorgehäuses 3 verbindet. Der Anschlusskanal 51 bietet Platz zur Aufnahme des Steckverbinders 50 sowie zur Aufnahme eines zusätzlichen Zwischenkreiskondensators 51. Dieser Zwischenkreiskondensator 51 ist geringer dimensioniert als der nicht gezeigte, oberhalb des Befestigungsrahmens 36 vorgesehene, ist aber näher an den Leistungsbauelementen 32 angeordnet.

Am Befestigungsrahmen 36 sind quer über die Oberseite verlaufende Verstärkungen 41 ausgebildet. Somit ist die Anpresskraft nach Anschrauben des Befestigungsrahmens auf die Leiterplatte übertragbar und von dieser weiter auf die Leistungsbauelemente 32. Letztere werden also gegen die Auflagefläche 33 gedrückt und fixiert. Somit ist eine gute Entwärmung der Leistungsbauelemente 32 über das Außengehäuse 2 bewirkt.

Am Befestigungsrahmen 36 ist eine Krempe 48 ausgebildet, die Zungen 37 aufweist. In die Krempe 48 ist eine weitere, nicht gezeigte Leiterplatte für Signalelektronik und den Gleichrichter und den Zwischenkreiskondensator des Umrichters einsetzbar. Die Zungen 37 rasten beim Einsetzen der weiteren Leiterplatte mit den Nasen 42 ein, wodurch die weitere Leiterplatte gehalten wird. Die weitere Leiterplatte ist über einen passenden Steckverbinder mit den Steckverbindern 38 elektrisch an die Leiterplatte 35 angeschlossen. Die weitere Leiterplatte umfasst Mittel zum Anschluss der Starkstromversorgung des Umrichters und Mittel zu Anschluss der Datenkommunikationsleitungen. Gleichrichtereinheit und Zwischenkreiskondensator sind auf der weiteren Leitplatte im linken Bereich angeordnet und werden durch den erhöht ausgeführten vorderen Ansatzteil 29 des Anschlusskastenansatzes 8 auch bei abgenommenem Anschlusskastendeckel 9 geschützt.

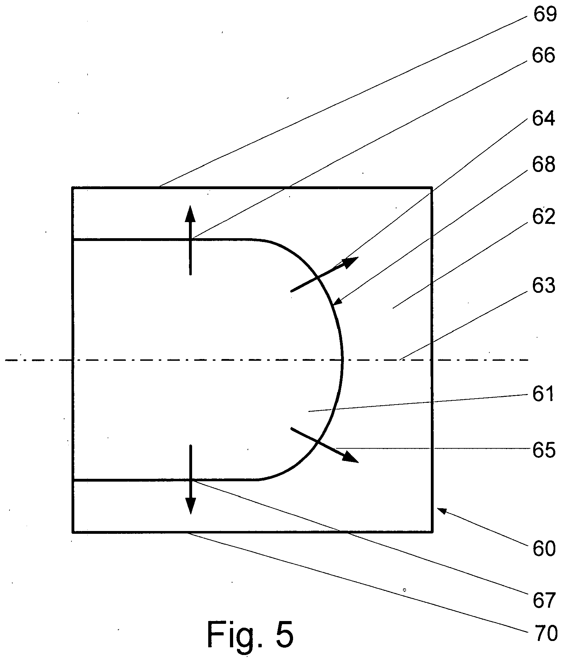

Figur 5 zeigt eine schematische Ansicht eines weiteren erfindungsgemäßen Anschlusskastens 60 von oben. Eine erste Plateaufläche 61 und eine zweite Plateaufläche 62 sind durch eine bogenförmig verlaufende Stirnfläche 68 getrennt. Die zweite Plateaufläche 62 ist hierbei um einen Betrage abgesetzt gegenüber der ersten Plateaufläche 61 und ist somit vom Betrachter weiter entfernt. Plateaufläche 61, 62 und Stirnseite 68 formen eine Stufe. Die Stirnseite 68 ist an den Enden des bogenförmigen Bereichs parallel zu den Seitenflächen 69, 70 des Anschlusskastens 60 geführt. In der Stirnseite 68 sind Öffnungen 64, 65, 66, 67 für die Kabeldurchführung ins Innere des Anschlusskastens 60 vorgesehen. Die Öffnungen 64, 65, 66, 67 weisen jeweils eine Öffnungsrichtung auf, die durch Pfeile symbolisiert wird. Der Anschlusskasten 60 weist eine Symmetrieebene 63 auf, von der die Öffnungen 64, 65, 66, 67 mit ihren Öffnungsrichtungen jeweils weg weisen. Die Öffnungen 64, 65, 66, 67 bieten jeweils die Möglichkeit einer Kabeldurchführung, die durch die zweite Plateaufläche 62 und die Höhe der Stirnseite 68 geschützt ist.

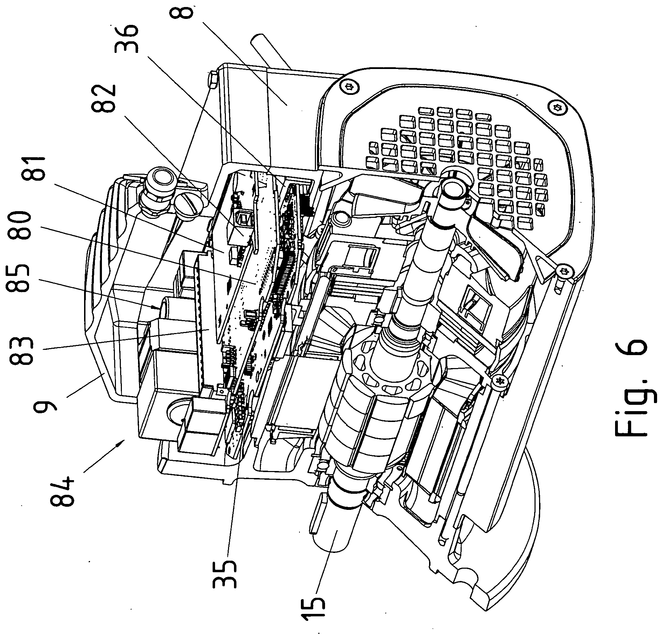

Figur 6 zeigt eine Schnittansicht des Umrichtermotors aus Figur 1 mit zusätzlichen elektronischen Optionen im Innenraum des Motoranschlusskastens.

Am Befestigungsrahmen 36 ist auf der Unterseite die Leiterplatte 35 mit der Leistungselektronik zur Motoransteuerung angebracht. An der Oberseite des Befestigungsrahmens 36 ist eine weitere Leiterplatte 80 angebracht. Auf dieser Leiterplatte 80 ist mindestens eine nicht gezeigte Steuerelektronik für Buskommunikation, ein Steckverbinder 83, eine Gleichrichtereinheit 84 des Umrichters und eine Zwischenkreiskondensator 85 angeordnet.

Die Gleichrichtereinheit 84 und der Zwischenkreiskondensator 85 sind für Spannungen von 400 V und mehr und für hohe Stromsstärken von 1 A und mehr ausgelegt und weisen daher ein erhöhtes Baumaß auf. Somit wird der durch die Stufe im Anschlusskastendeckel 9 bereitgestellte zusätzliche Innenraum ausgenutzt.

Der Steckverbinder 83 ist passend zu einem nicht gezeigten, weiteren Steckverbinder an der Innenseite des Anschlusskastendeckels 9 ausgebildet. Dieser weitere Steckverbinder wird durch das Aufsetzen des Anschlusskastendeckels 9 auf den Anschlusskastenansatz 8 in den Steckverbinder 83 gesteckt. Somit ist die Anschlussleitung des Umrichtermotors an den weiteren Steckverbinder über Kabelklemmen anschließbar.

An die Leiterplatte 80 ist eine dritte Leiterplatte 81 angeschlossen, vorzugsweise über eine Steckverbindung, deren Steckverbinder auf den jeweiligen Leiterplatten 80, 81 festgelötet sind. Die dritte Leiterplatte 81 dient zum Auslesen von Motorgrößen, insbesondere Betriebsmessgrößen, die zur Diagnose über einen USB-Anschluss 82 auslesbar sind. Alternativ ist eine IR-Schnittstelle oder ein anderer Standard-Steckverbinder vorgesehen.

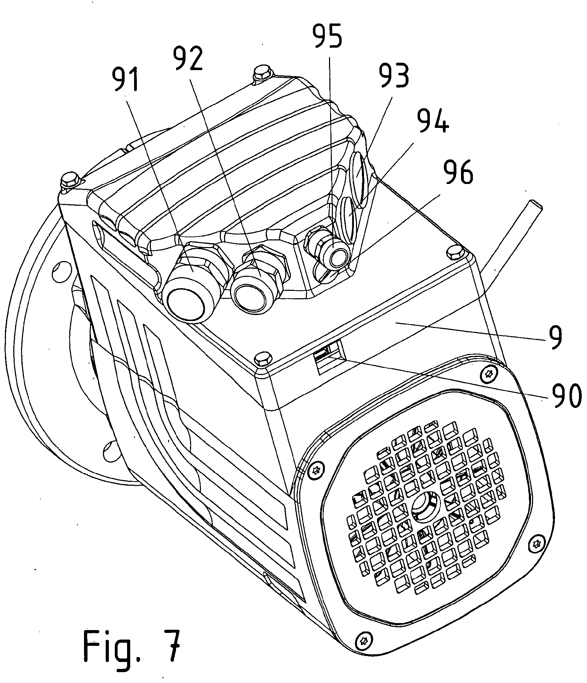

Figur 7 zeigt eine Schrägansicht des Umrichtermotors aus Figur 6. Der Anschlusskastendeckel 9 formt eine bugförmige Stufe und unterscheidet sich von dem Anschlusskastendeckel aus Figur 1 bis 3 nur durch eine zusätzliche Öffnung 90, hinter der ein USB-Anschluss 82 zum Auslesen von Betriebsmessgrößen angeordnet ist.

An der Stirnfläche der Stufe sind die möglichen Belegungen der Öffnungen für die Kabeldurchführung gezeigt: Ein Anschlussstutzen 91 für Kabel mit einem ersten Durchmesser, alternativ ein Verschluss 93, ein Anschlussstutzen 92 für Kabel mit einem zweiten, geringeren Durchmesser, alternativ ein Verschluss 94, und ein Anschlussstutzen 95 für Datenkabel mit einem nochmals deutlich geringeren Durchmesser, alternativ ein Verschluss 96. Die Anordnung der Anschlussstutzen und Verschlüsse ist lediglich beispielhaft, andere Kombinationen sind ebenfalls möglich.

Es hat sich gezeigt, dass für die Kabel mit erstem und zweiten Durchmesser, die für Starkstromübertragung ausgelegt sind, je eine Öffnung auf den Schrägseiten der Stufe ausreichend ist, um eine Kabelführung nach drei Seiten des Umrichtermotors zu ermöglichen. Der Rücksprung der Anschlussöffnungen erlaubt bei Einhaltung des zulässigen Biegeradius' der Kabel eine Kabelführung, die die Störkontur des Umrichtermotors nicht vergrößert. Bei den wesentlich flexibleren Datenkabeln ist dagegen eine Anschlussfläche ausreichend.

## Patentansprüche

1. Motoranschlusskasten (7) mit einem Unterteil und einem Oberteil, wobei eine Umrichterelektronik im Kasteninneren vorgesehen ist, wobei im Oberteil eine Stufe (47) ausgeformt ist, wobei die Stufe zwei Plateauflächen und eine die Plateauflächen verbindende Stirnseite (68) umfasst und wobei in der Stirnseite der Stufe Öffnungen (27) für Kabeldurchführungen ausgebildet sind, wobei die Umrichterelektronik ein Leistungsbauelement (32) umfasst, Auflagefläche (33) und am Boden des Unterteils eine plane ausgebildet ist, wobei das Leistungsbauelement zur Entwärmung auf die Auflagefläche gelegt ist, wobei das Leistungsbauelement auf einer Leiterplatte (35) angeordnet ist, wobei die Leiterplatte das Leistungsbauelement auf die Auflagefläche drückt, wobei ein Befestigungsrahmen (36) vorgesehen ist, an dem die Leiterplatte befestigt ist und der die Leiterplatte nach oben abdeckt, wobei im Befestigungsrahmen Öffnungen ausgebildet sind, durch die Steckverbinderteile (39) der Leiterplatte ragen,
wobei
der Befestigungsrahmen mit dem Unterteil verschraubt ist und die Leiterplatte gegen den Boden des Unterteils drückt
oder wobei
der Befestigungsrahmen eine Krempe (48) aufweist, wobei in die Krempe eine weitere Leiterplatte eingeklipst ist.

2. Motoranschlusskasten nach dem vorangehenden Anspruch, wobei in die Krempe (48) eine weitere Leiterplatte eingeklipst ist, wobei die weitere Leiterplatte über einen passenden Steckverbinder mit dem Steckverbinder (38) der ersten Leiterplatte (35) verbunden ist, und/oder dass auf der weiteren Leiterplatte in einem Bereich, der von dem höheren Ende des Unterteils zumindest teilweise umgeben wird, ein Zwischenkreiskondensator (51) und/oder ein Gleichrichtermodul angeordnet ist.

3. Motoranschlusskasten nach einem der vorangehenden Ansprüche, wobei die Stufe (47) im Oberteil im Inneren des Motoranschlusskastens einen Bereich bildet, in dem ein Zwischenkreiskondensator (51) und/oder ein Gleichrichtungsmodul der Umrichterelektronik angeordnet ist oder sind.

4. Umrichtermotor (1) wobei ein inneres rohrförmiges Teil (3) vorgesehen ist, das den Stator umgibt, und ein äußeres rohrförmiges Teil (2) vorgesehen ist, welches das innere rohrförmige Teil umgibt, wobei im äußeren rohrförmigen Teil ein Lüfter (26) vorgesehen ist der Luft entlang
der Innenseite des äußeren rohrförmigen Teils bewegt, wobei an der Außenseite des äußeren rohrförmigen Teils ein Motoranschlusskasten (7) nach mindestens einem der vorangegangenen Ansprüche ausgebildet ist.

## Claims

1. Motor junction box (7) comprising a lower part and an upper part,
wherein a converter electronics is provided in the box interior,
wherein a step (47) is shaped integrally in the upper part,
wherein the step comprises two plateau surfaces and an end face (68) connecting the plateau surfaces, and
wherein openings (27) for cable bushings are formed in the end face of the step,
wherein the converter electronics comprises a power component (32),
and a planar bearing surface (33) is formed at the bottom of the lower part,
wherein the power component is placed onto the bearing surface for the purpose of heat dissipation,
wherein the power element is arranged on a printed circuit board (35),
wherein the printed circuit board presses the power component onto the bearing surface, wherein a fixing frame (36) is provided,
to which the printed circuit board is fixed
and which covers the top of the printed circuit board,
wherein openings are formed in the fixing frame, through which openings the plug-in connector parts (39) of the printed circuit board protrude,
wherein the fixing frame is screwed to the lower part and pushes the printed circuit board against the bottom of the lower part
or wherein
the fixing frame has a brim (48), wherein a further printed circuit board is clipped into the brim.

2. Motor junction box according to the preceding claim, wherein a further circuit board is clipped into the brim (48),
wherein the further circuit board is connected to the plug-in connector (38) of the first printed circuit board (35) by means of a matching plug-in connector,
and/or wherein
a DC link capacitor (51) and/or a rectifier module is/are arranged on the further printed circuit board in a region that is at least partly surrounded by the higher end of the lower part.

3. Motor junction box according to any of the preceding claims,
wherein, inside the motor junction box, the step (47) in the upper part forms a region in which a DC link capacitor (51) and/or a rectification module of the converter electronics is/are arranged.

4. Converter motor (1), wherein an inner tubular part (3) is provided, which surrounds the stator, and an outer tubular part (2) is provided, which surrounds the inner tubular part, wherein a fan (26) is provided in the outer tubular part and moves air along the inside of the outer tubular part, wherein a motor junction box (7) according to at least one of the preceding claims is formed on the outside of the outer tubular part.

## Revendications

1. Boîte de raccordement (7) pour moteurs,
comprenant une partie inférieure et une partie supérieure,
une électronique de convertisseur étant prévue dans l'espace interne de ladite boîte,
un échelon (47) étant façonné dans la partie supérieure,
lequel échelon inclut deux méplats et une face extrême (68) reliant lesdits méplats et des orifices (27), dédiés à des traversées de câbles, étant pratiqués dans ladite face extrême de l'échelon,
sachant que ladite électronique de convertisseur inclut un composant de puissance (32) et qu'une surface plane d'appui (33) est ménagée au fond de la partie inférieure,
lequel composant de puissance est mis en place sur ladite surface d'appui, en vue de la dissipation de chaleur,
ledit composant de puissance étant disposé sur une plaquette imprimée (35),
laquelle plaquette imprimée presse ledit composant de puissance sur ladite surface d'appui,
sachant
qu'il est prévu un cadre de fixation (36)
auquel la plaquette imprimée est fixée
et qui occulte, vers le haut, ladite plaquette imprimée,
lequel cadre de fixation est percé d'orifices, à travers lesquels dépassent des pièces (39) de connexion par enfichage de ladite plaquette imprimée,
sachant que ledit cadre de fixation est solidarisé par vissage avec la partie inférieure, et presse ladite plaquette imprimée contre le fond de ladite partie inférieure,
ou sachant que
ledit cadre de fixation est muni d'un rebord (48), une plaquette imprimée additionnelle étant clipsée dans ledit rebord.

2. Boîte de raccordement pour moteurs, selon la revendication précédente, dans laquelle une plaquette imprimée additionnelle est clipsée dans le rebord (48), sachant que
ladite plaquette imprimée additionnelle est raccordée, par l'intermédiaire d'un connecteur enfichable adéquat, au connecteur enfichable (38) de la première plaquette imprimée (35), et/ou sachant
qu'un condensateur de circuit intermédiaire (51), et/ou un module redresseur, est (sont) disposé(s) sur ladite plaquette imprimée additionnelle, dans une région au moins partiellement entourée par l'extrémité de la partie inférieure, située à un niveau plus élevé.

3. Boîte de raccordement pour moteurs, selon l'une des revendications précédentes,
dans laquelle l'échelon (47)
forme dans l'espace interne de ladite boîte de raccordement pour moteurs, dans la partie supérieure, une région dans laquelle est (sont) disposé(s) un condensateur de circuit intermédiaire (51) et/ou un module redresseur de l'électronique de convertisseur.

4. Moteur-convertisseur (1)
dans lequel est prévue une partie tubulaire intérieure (3) entourant le stator,
et dans lequel est prévue une partie tubulaire extérieure (2) entourant ladite partie tubulaire intérieure, sachant qu'il est prévu, dans ladite partie tubulaire extérieure, un ventilateur (26) mettant de l'air en mouvement le long de la face interne de ladite partie tubulaire extérieure,
une boîte de raccordement (7) pour moteurs étant réalisée, en conformité avec au moins l'une des revendications précédentes, à la face externe de ladite partie tubulaire extérieure.
